# EUROPEAN PATENT APPLICATION

(11) **EP 4 836 238 A1**
(43) Date of publication of application: **04.11.2026**
(21) Application number: 26175382.6
(22) Date of filing: 29.04.2026
(51) Int. Cl.: H02J 50/30, H02J 7/35, H02J 50/00, H02J 50/10, H02J 50/40

(54) **WIRELESS POWER TRANSMISSION SYSTEM AND METHOD**

(30) Priority: 29.04.2025 CA 3272128
(71) Applicant: Morgan Solar Inc., Toronto, ON M6N 0A8 (CA)
(72) Inventor: MORGAN, John Paul, Toronto, M6J 1Z8 (CA); TAMESHTIT, Allan, Toronto, M3H 5Z8 (CA)
(74) Representative: Bals & Vogel Patentanwälte PartGmbB

(57) **Abstract**

A wireless power transmission system for transmitting energy across a barrier has on one side an exterior space and on an opposite side an interior space. The system comprises a solar module in the exterior space, said solar module includes photovoltaic cells for converting solar energy into electricity; an emitter in the exterior space for emitting an electric field and a magnetic field capable of penetrating the barrier, said emitter is electrically coupled to the solar module and is powered directly or indirectly by the electricity; and a power component in the interior space, said power component has a receiver for interacting with the electric field and the magnetic field, and has a converter for converting energy associated with the electric field and the magnetic field into an electromotive force for charging an interior battery and/or powering an electrical device in the interior space.

## Description

### TECHNICAL FIELD

The present technology relates generally to wireless power transmission systems and methods for wirelessly transmitting energy across a barrier.

### BACKGROUND

With increasing interests in renewable energy, many building or homeowners desire to install solar panels and solar energy harvesting systems. Solar energy systems can be installed on housing or building roofs in order to take advantage of the relatively unused sun exposure area.

Roof and window solar panels, building facades with photovoltaic cells, and solar roofing solutions (e.g. "shingles" formed from photovoltaic material) conventionally must be connected with charge controllers, battery banks, inverters, and electronic devices via electrical cables. During installation, holes must be drilled in the walls or roofs to allow the cables therethrough and to connect with the electrical devices indoors. This can become burdensome, increasing time and cost for installation. In addition, these electronic cables may be prone to failure over time. Diagnosing a faulty cable connection is also not easy while the cables are hidden inside walls.

There remains a desire to develop improved solar power systems for window or roof installation.

### SUMMARY

It is an object of the present technology to ameliorate at least some of the inconveniences present in the prior art.

According to an aspect of the present technology, there are provided wireless solar panel systems and corresponding wireless energy transmission methods for providing a solar energy harvesting solution. The present technology facilitates installation, as it eliminates the process of drilling cable holes and feeding electronic cables therethrough when installing a solar energy harvesting arrangement on a window or a roof. Some non-limiting embodiments also provide architecturally desirable aesthetics while remaining an efficient arrangement for energy collection.

According to one aspect of the present technology, there is provided a wireless power transmission system for transmitting energy across a barrier having on one side an exterior space and on an opposite side an interior space, the system comprises a solar module in the exterior space, said solar module includes photovoltaic cells for converting solar energy into electricity; an emitter in the exterior space for emitting at least one of an electric field and a magnetic field capable of penetrating the barrier from the exterior space to the interior space, said emitter is electrically coupled to the solar module and is powered directly or indirectly by the electricity; and a power component in the interior space, said power component has a receiver for interacting with the at least one of the electric field and the magnetic field, and has a converter for converting energy associated with the at least one of the electric field and the magnetic field into an electromotive force for at least one of charging an interior battery in the interior space and powering an electrical device in the interior space.

In some embodiments, the system further comprises a junction box, the emitter is electrically coupled to the solar module via the junction box.

In some embodiments, the system further comprises a bracket attached to the emitter for affixing the emitter to the barrier with fasteners.

In some embodiments, the emitter includes a light source, the at least one of an electric field and a magnetic field is electromagnetic radiation, and the power component includes a photovoltaic device for receiving the electromagnetic radiation and generating electricity therefrom.

In some embodiments, the barrier is a sheet of glass.

In some embodiments, the barrier is a window having two panes and the emitter has a moveable lens to cause a focal point of the light source to be between the two panes.

In some embodiments, the emitter is disposed between the solar module and the barrier.

In some embodiments, the light source is a light emitting diode.

In some embodiments, the light source is a laser.

In some embodiments, the system further comprises an exterior battery in the exterior space charged by the electricity generated by the solar module, and the emitter is powered directly by the electricity or indirectly by the exterior battery.

In some embodiments, the emitter includes an exterior induction element and the receiver includes an interior induction element, said exterior induction element producing a variable magnetic field that causes the interior induction unit to produce the electromotive force.

In some embodiments, the system further comprises an electrical cable for connecting the solar module to the exterior induction element.

In some embodiments, the exterior induction element includes an adhesive to allow the exterior induction element to be affixed to the barrier.

In some embodiments, the interior induction element includes an adhesive to allow the interior induction element to be affixed to the barrier.

In some embodiments, the barrier is chosen from the group consisting of a window, a sunroof, a roof panel, a wall, a siding and a cladding.

In some embodiments, the emitter is disposed on an edge of the solar module.

In some embodiments, the distance between the emitter and the receiver is less than fifteen centimeters.

In some embodiments, the power component is attachable to the barrier.

In some embodiments, at least one of the emitter and the power component is adapted to rest against the barrier.

In some embodiments, the receiver is capable of being contained in a sphere having a diameter of ten centimeters.

In some embodiments, the system further comprises a rotatable arm to which is attached the emitter, the rotatable arm allows the emitter to be disposed across from the receiver.

In some embodiments, the rotatable arm is spring loaded to allow the rotatable arm to press against the barrier.

According to another aspect of the present technology, there is provided a wireless power transmission system for transmitting energy across a barrier having on one side an exterior space and on an opposite side an interior space, the system comprises a solar concentrator in the exterior space that gathers sunlight and produces concentrated solar radiation; an emitter in the exterior space that inputs the concentrated solar radiation and outputs light directed towards the barrier; and a power component in the interior space, said power component has a receiver for receiving the light from the emitter and has a converter for converting energy associated with said light into an electromotive force for at least one of charging an interior battery in the interior space and powering an electrical device in the interior space.

In some embodiments, the system is devoid of photovoltaic cells in the exterior space.

In some embodiments, the barrier is chosen from the group consisting of a window, a sunroof, a roof panel, a wall, a siding and a cladding.

In some embodiments, the emitter includes a laser that is pumped by the concentrated solar radiation to produce the light.

In some embodiments, the barrier is a window having two panes and the emitter has a moveable lens to cause the light to have a focal point that is between the two panes.

In some embodiments, the emitter includes a reflector for reflecting the concentrated solar radiation to thereby output the light towards the barrier.

According to another aspect of the present technology, there is provided a method for wirelessly transmitting energy across a barrier having on one side an exterior space and on an opposite side an interior space, the method comprises converting solar energy into electricity using photovoltaic cells located in the exterior space; emitting, from an emitter located in the exterior space, at least one of an electric field and a magnetic field capable of penetrating the barrier into the interior space, said emitter is powered directly or indirectly by the electricity; and providing a power component in the interior space, said power component has a receiver for interacting with the at least one of the electric field and the magnetic field, and has a converter for converting energy associated with the at least one of the electric field and the magnetic field into an electromotive force for at least one of charging an interior battery in the interior space and powering an electrical device in the interior space.

According to another aspect of the present technology, there is provided a method for wirelessly transmitting energy across a barrier having on one side an exterior space and on an opposite side an interior space, the method comprises gathering sunlight with a solar concentrator and producing concentrated solar radiation; inputting the concentrated solar radiation into an emitter located in the exterior space and outputting light directed towards the barrier; and receiving the light from the emitter with a power component in the interior space and converting energy associated with said light into an electromotive force for at least one of charging an interior battery in the interior space and powering an electrical device in the interior space.

### BRIEF DESCRIPTION OF THE DRAWINGS

Embodiments will now be described more fully with reference to the accompanying drawings in which:
Figure 1 is a schematic view of one non-limiting embodiment of a wireless power transmission system according to the present technology, illustrated as installed around a double-pane window.
Figure 2 is a schematic view of the wireless power transmission system of Figure 1, illustrated as installed around a roof.
Figure 3 is a schematic detailed view of components of the wireless power transmission system of Figure 1.
Figure 4 is a schematic detailed view of another non-limiting embodiment of components of the wireless power transmission system of Figure 1.
Figure 5A is a schematic view of another non-limiting embodiment of a power transmission system according to the present technology, illustrated as installed around a double-pane window.
Figure 5B is a schematic view of another non-limiting embodiment of a power transmission system according to the present technology, illustrated as installed around a window.
Figure 5C is a schematic view of another non-limiting embodiment of a power transmission system according to the present technology, illustrated around a window.
Figure 6A is a schematic view of a non-limiting embodiment of an emitter of the wireless power transmission system of any one of Figures 1 to 5C.
Figure 6B is a schematic view of the emitter of Figure 5A in a different position.
Figure 7 is a schematic view of another non-limiting embodiment of a power transmission system according to the present technology, illustrated as installed on a vehicle.
Figure 8 is a flowchart depicting a method for wirelessly transmitting energy across a barrier according to one non-limiting embodiment of the present technology.
Figure 9 is a flowchart depicting a method for wirelessly transmitting energy across a barrier according to another non-limiting embodiment of the present technology.

Unless otherwise indicated, it should be noted that the Figures may not be drawn to scale.

### DETAILED DESCRIPTION

For a better understanding of various features of the present technology, reference is made to the following description and the accompanying Figures. A person skilled in the art would understand that modifications to the implementations described below are possible and may be necessary for specific applications.

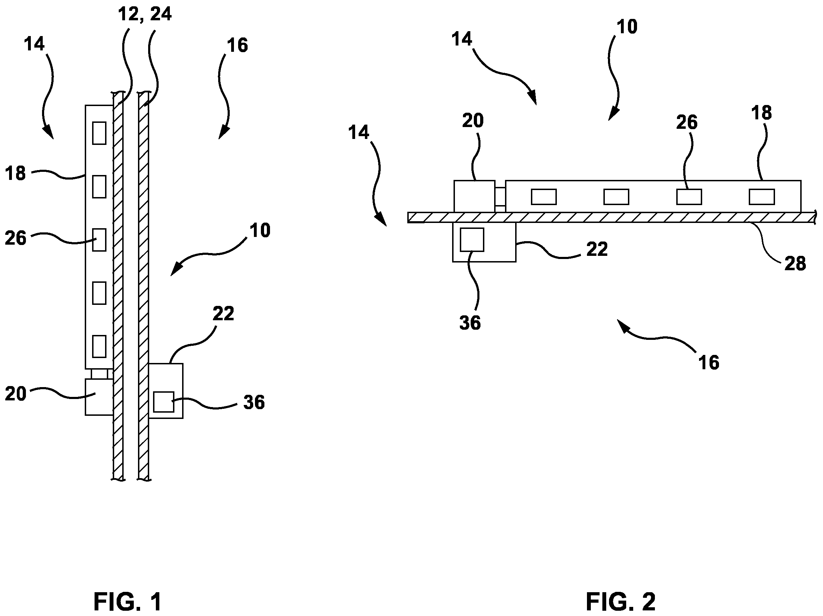

With reference to Figures 1 to 4, a wireless power transmission system 10 is illustrated according to several non-limiting embodiments of the present technology. The system 10 is configured for being installed across a barrier 12 having on one side an exterior space 14 and on an opposite side an interior space 16. Depending on the embodiment, the barrier may be, but is not limited to, a sheet of glass, a window 24 having one or more panes, a sunroof, a vehicle chassis, a balcony railing panel, a transport tube, a roof panel, a wall siding, and a building wall. It is contemplated that the barrier could be formed from one or more types of building cladding, including but not limited to: insulation, weather resist layers, and aesthetic coverings such as brick, wood, or stone. As will be described in more detail below, the system 10 includes a solar module 18 and an emitter 20 in the exterior space 14, and a power component 22 in the interior space 16.

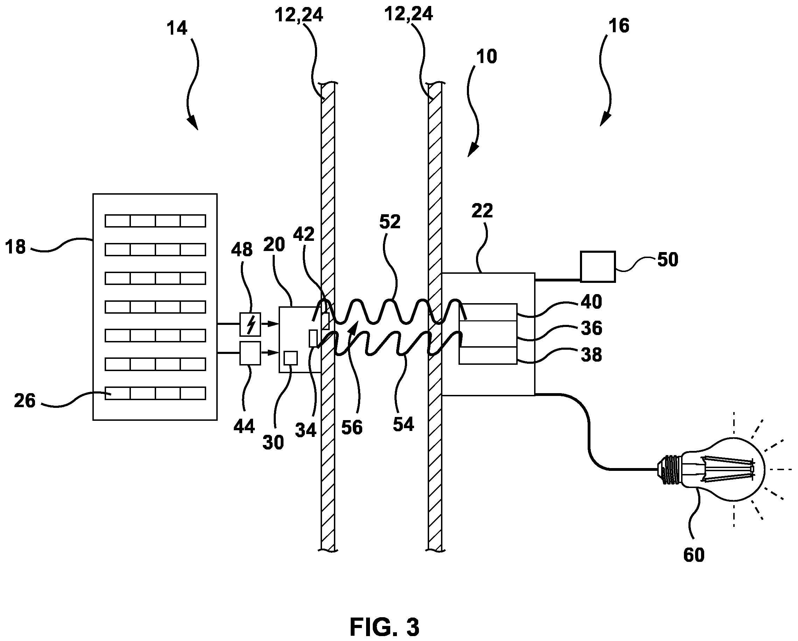

With reference to Figure 1, there is depicted the wireless power transmission system 10 installed across a double-paned window barrier 24. The system 10 includes the solar module 18 and the emitter 20 in the exterior space 14 of the window 24, *i.e.* on an outside of the window 24. The system 10 also includes a power component 22 in the interior space 16 of the window 24, *i.e.* on an inside of the window 24. The solar module and the power component would typically be parallel to the window pane, but in Figure 3 they are perpendicular thereto. Depending on the embodiment, the window 24 may have one or more panes. Broadly, the system 10 generates electricity in the exterior space 14 using the solar module 18. The emitter 20 is electrically connected to the solar module 18, from which the emitter 20 receives electricity. The emitter 20 then transfers energy, in the form of light or through the principle of magnetic field induction, through the barrier 12 to the power component 22 in the interior space 16.

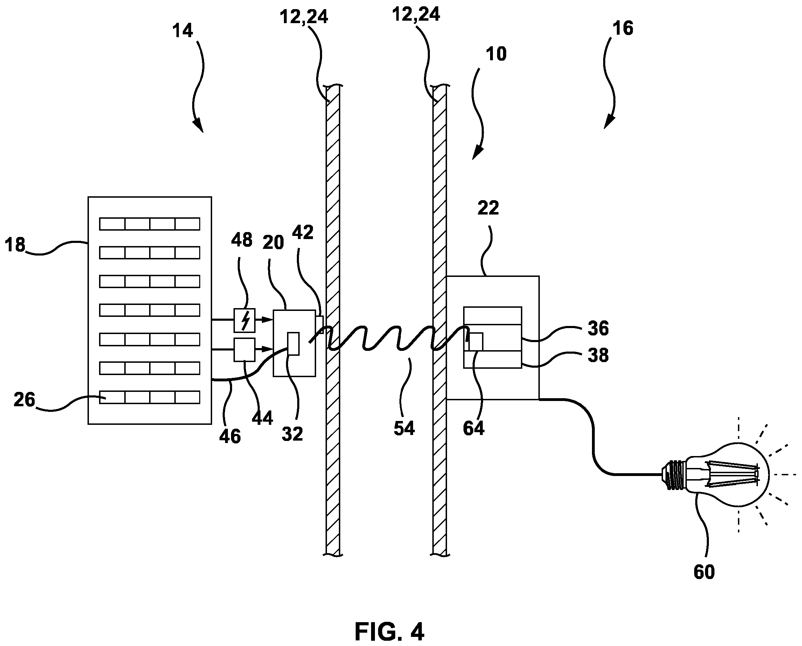

With reference to Figure 2, the wireless power transmission system 10 is also configured to be installed across a roof 28. The system 10 includes the solar module 18 and the emitter 20 in the exterior space 14 of the roof 28, *i.e.* on a top side of the roof 28. The system 10 also includes the power component 22 in the interior 16 space of the roof 28, *i.e.* inside the roof 28. For example, the power component 22 can be disposed on a ceiling of an attic. Specifics of the system 10 are described below. It is noted that details of the system 10 may vary when installed in different arrangements, such as for installation on a window versus installation on a roof. Like numbers in different Figures may refer to the same functional unit, and not necessarily to the identical component. For example, the emitter 20 in Figures 3 and 4, while serving the same function, viz. emitting an electric and/or a magnetic field, may not be exactly identical since some features of the emitter in Figure 3 appropriate for emitting radiation may be different than some features of the emitter in Figure 4 appropriate for emitting a magnetic field suitable for the principle of induction. Thus, the emitter in Figure 3 acts as an electromagnetic radiation or light source 30, while the emitter in Figure 4 could include an exterior induction element 32.

With reference to Figure 3, components of the wireless power transmission system 10 will be described in greater detail in an example where the emitter emits electromagnetic radiation.

The solar module 18 is a panel 18 having a plurality of rows of photovoltaic cells 26. Broadly, the photovoltaic cells 26 receive and convert solar energy into electricity. Depending on the embodiment, the solar module 18 could be formed from, but is not limited to, glass, plastic polymer, aluminum, silicone, copper, silver, polyester, monocrystalline, steel, and zinc. Depending on the embodiment, the photovoltaic cells 26 could be formed from, but is not limited to, silicon, gallium arsenide, cadmium telluride, and copper indium gallium selenide.

The photovoltaic cells 26 within a given row are electrically connected to each other with a plurality of intracellular connectors (not shown). The different rows of photovoltaic cells are in turn electrically connected to each other with a plurality of intercellular connectors (not shown in Figures). The particular size, arrangement, and number of photovoltaic cells 26 and rows thereof is not meant to be particularly limited.

Various sizes of the solar module 18 are contemplated. For example, the solar module 18 could be 65 inches by 39 inches, roughly the size of a standard solar module. In another example, an assembly could be 96 inches by 36 inches, or any other appropriate dimensions..

The emitter 20 is operatively connected to the solar module 18 for receiving energy therefrom. The emitter 20 includes a light source 30 and a moveable lens 34 Depending on the embodiment, the light source 30 of the emitter 20 may be, but is not limited to, a light emitting diode or a laser.

The power component 22 includes a receiver 36 that interacts with at least one of an electric field and a magnetic field, and a converter 38, which after this interaction produces electricity that can power various electrical devices.

In some embodiments, the solar module 18 may be mounted onto the barrier, for instance near the window 24 or on the roof 28, with brackets 42 and fasteners. The emitter 20 may be disposed, but is not limited to, between the solar module 18 and the barrier 12, or on an edge beside the solar module 18.

In some embodiments, an electrical cord or cable may connect the solar module to the emitter, offering the possibility of installing the module and emitter a distance apart; such a scenario can arise, for example, when solar modules are attached to balcony railing panels, which are often made of glass. Solar modules can be added to balcony railing panels on the inside or on the outside of the balcony, or to replace the balcony railing panel with solar modules altogether.

In the embodiment shown in Figure 3, the emitter emits an electric field and a magnetic field in the form of electromagnetic radiation capable of penetrating the barrier, a window adjacent to the balcony across which energy is transferred. The solar module is installed on or around the balcony railing panel. The emitter is installed inside the balcony space, which in this example is referred to as the exterior space. The space on the other side of the window, which is in the building, is the interior space. A power component in the interior space has a receiver for interacting with electromagnetic radiation and has a converter for converting energy associated therewith into an electromotive force for at least one of charging an interior battery in the interior space and powering an electrical device in the interior space.

The emitter is electrically coupled to the solar module and is powered directly or indirectly by the electricity produced from PV cells. A power component in the interior space has a receiver for interacting with the at least one of the electric field and the magnetic field, and has a converter for converting energy associated with the at least one of the electric field and the magnetic field into an electromotive force for at least one of charging an interior battery in the interior space and powering an electrical device in the interior space.

Fasteners can be used to secure the modules to the balcony railing panels. These fasteners can include hooks and clamps that can be tightened. Moveable hooks on the module can hook onto the perimeter of the balcony railing panel. The hooks can be adjusted and then fixed into position so that the module is secured. Alternatively, or in addition, clamps can be used to fasten the module to the balcony railing panel. The hooks and clamps can be spring loaded or tightened with screws. The clamps can have soft materials, such as rubber, to prevent scratching of the balcony railing and to provide friction to prevent the module from slipping. Magnets can also be used to hold the module in place if the balcony railing has metal components. It is contemplated that the emitter 20 is best installed across a section of the barrier 12 that is devoid of metals for sufficient transmission of the electromagnetic radiation.

Sunlight passing through the glass can be captured by the solar module and converted to electricity that runs through the electrical cord, which may, for instance, be a few meters long. The electricity then reaches the emitter, which can be installed against a window in the balcony. From there, power can be wirelessly transferred to inside the apartment using light (as in Figure 3) or magnetic induction (as in Figure 4), as described below. For new builds, the solar panel would not be added to an existing balcony railing panel but instead serve as the railing panel.

There may be a bracket 42 attached to the emitter 20 for affixing the emitter onto the barrier with fasteners. The emitter 20 is electrically coupled to the solar module 18 by means of a junction box 44, which provides protection for the electric cables 46 in the exterior space from harsh weather and wild animals. The junction box 44 could be made from, but is not limited to, plastic (polycarbonate or ABS), stainless steel, and stainless steel. In the interior space, the power component 22 is also attachable to the barrier 12. The attachment could include, but is not limited to, brackets with fasteners, adhesives, and mounting screws.

The system 10 includes one or both of an exterior battery 48 and an interior battery 50. The exterior battery is electrically connected to the solar module 18 and the emitter 20, and is charged by the electricity generated from the solar module 18. The interior battery 50 is electrically connected to the power component 22 and is charged by electricity generated from the power component 22. The exterior battery 48 and the interior battery 50 may be, but are not limited to, lithium-ion, lithium iron phosphate, and lead-acid batteries. It is also contemplated that the batteries 48, 50 could be omitted in some embodiments.

The emitter 20 is powered by the electricity generated from the solar module 18, as noted above. The power is provided either directly by the photovoltaic cells 26 to the emitter 20 or indirectly by the exterior battery 48 charged from the electricity generated in the photovoltaic cells 26. The emitter 20 emits at least one of an electric field 52 and a magnetic field 54 that is capable of penetrating the barrier from the exterior space to the interior space. In the embodiment illustrated in Figure 3, the emitter 20 produces electromagnetic radiation 56, specifically through the light source 30.

Depending on the embodiment, a housing of the power component 22 could be made from, but is not limited to, plastic, stainless steel, and aluminum. The receiver 36 of the power component 22 is configured for interacting with the at least one of the electric field 52 and the magnetic field 54. In the embodiment illustrated in Figure 3, the receiver 36 is specifically a photovoltaic device, which can include photovoltaic cells 40, that is configured to interact with the electromagnetic radiation 56. After this interaction, a converter 38, which can include electrical conductors and possibly an inverter, generates electricity that is delivered and stored in the interior battery 50 (when present), and powers optional electrical devices 60 in the interior space 16 as desired. The electrical devices 60 could be, but not limited to, a light bulb, heater, charging station, and air conditioner. Instead of powering electrical devices 60 indirectly via the interior battery 50, it is possible to power the electrical devices 60 directly with electricity generated by the converter 38.

For safety reasons, in the embodiment where the barrier 12 is a double-pane window 24, the emitter 20 has a moveable lens 34 to cause a focal point of the light source 30 to be between the two panes. By having the focal point of the light source in an inert region lying between the two panes, which is inaccessible to human skin, other tissue or substance that could catch fire, the possibility of an intense light beam causing harm to people, such as by burning or causing a fire, is lessened.

In one non-limiting embodiment of the present technology, as illustrated in Figure 4, the emitter 20 includes the exterior induction element 32 and the receiver 36 includes an interior induction element 64. A converter includes various electrical components, which may include electrical conductors (wiring/cabling), capacitors, resistors and inverters to produce electricity. The exterior induction element 32 produces a variable magnetic field 54 causing the interior induction element 64 to produce the electromotive force 58 via the principle of induction. The exterior induction element 32 is electrically connected to the solar module 18 via the electric cable 46. Depending on the embodiment, the exterior induction element 32 and/or the interior induction element 64 may comprise an adhesive to allow the exterior element and/or the interior induction element to be affixed to the barrier 12.

In some embodiments, a distance between the emitter 20 and the receiver 36 must be less than fifteen centimeters. Depending on the embodiment, the strength of the electric field 52 and/or magnetic field 54 are subject to change depending on barrier 12 material and thickness upon installation.

The embodiments of Figures 3 and 4 are directed to balcony applications where the barrier is the window, the exterior space coincides with the space inside the balcony and the interior space coincides with the space on the other side of the window, namely inside the building. In other embodiments, such as a sunroom application, the barrier can correspond to a glass panel that forms the perimeter of a sunroom (or the railing of an enclosed balcony). The glass panel is the barrier across which energy is transferred. In such case, the solar module and emitter are installed outside the sunroom, which in this example is referred to as the exterior space. The solar module is installed on or around the glass panel. The emitter in the exterior space emits at least one of an electric field and a magnetic field capable of penetrating the barrier. In this example, the sunroom space on the other side of the barrier is referred to the interior space. A power component in the interior space has a receiver for interacting with the at least one of the electric field and the magnetic field and has a converter for converting energy associated with the at least one of the electric field and the magnetic field into an electromotive force for at least one of charging an interior battery in the interior space and powering an electrical device in the interior space.

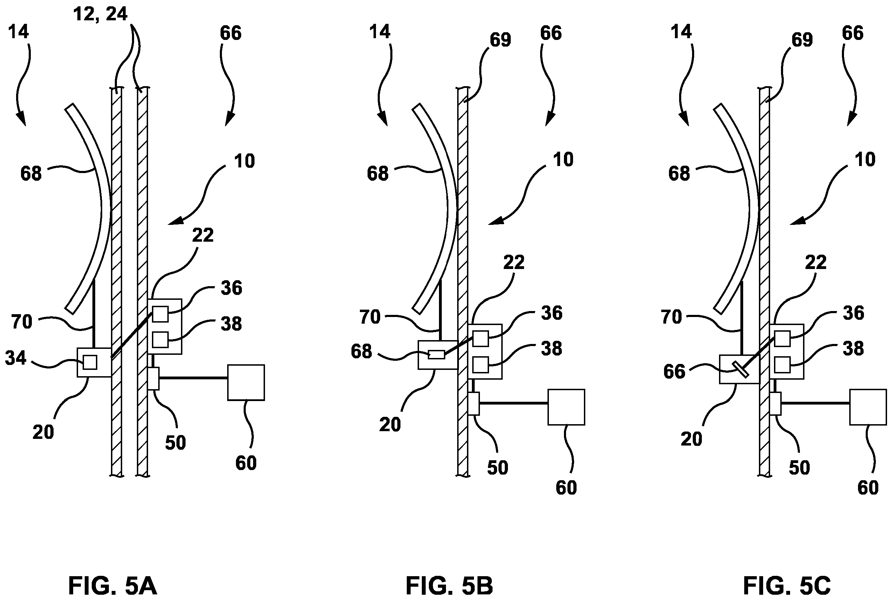

With reference to Figures 5A to 5C, another non-limiting embodiment of a wireless power transmission system 66 is illustrated. The system 66 includes a solar concentrator 68. As will be described in more detail below, the emitter 70 includes at least one of a reflector 72, a moveable lens 34, and/or a laser 74. Elements of the system 66 that are similar to those of the system 10 retain the same reference numeral and will generally not be described again.

The concentrator 68 may be, but is not limited to, a concave mirror or lens with tracking system. As with the system 10, the concentrator 64 is attached to the barrier on the exterior space, and a power component 76 is attached to the barrier on the interior space opposite to the emitter. The power component 76 includes a receiver 78 and a converter 80.

The concentrator 68 gathers sunlight and produces concentrated solar radiation 82. The emitter 70 then receives the solar radiation and outputs light towards the barrier 12. By the present embodiment, as depicted in Figure 5A where the system is installed across a double pane window 24, a movable lens 34 in the emitter 70 causes the solar radiation to have a focal point that is between the two panes, with the attendant safety advantageous described above.

In at least some embodiments, as depicted in Figure 5B, the laser 74 is pumped by the incident concentrated solar radiation 82 and produces light towards the barrier 69. The specific frequency for the laser 74 may be chosen to achieve sufficient laser beam penetration through the barrier 12 prior to installing the system 66. In at least some other embodiments, as depicted in Figure 5C, the reflector 72 reflects the concentrated solar radiation 82 towards the barrier 12.

By the present embodiments, there may be electrical switches that control the electricity flow in the electric cables.

It is contemplated that, for maximum radiation transmission, a small window may be installed in the wall/roof where the system is to be installed. For example, in what otherwise would be a brick wall, a hole could be carved out in the wall and a window installed therein. The window could more easily allow energy, derived from the sun, to be transferred from the exterior space into the interior space.

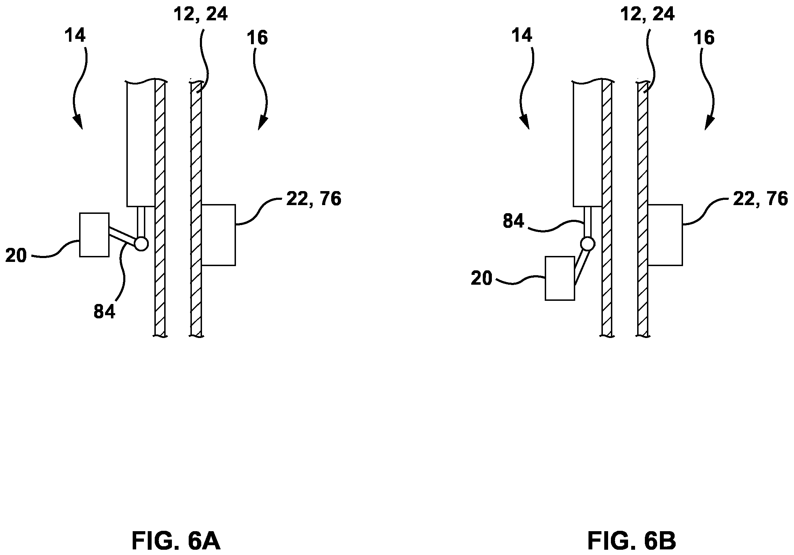

According to a non-limiting embodiment of the present technology, as illustrated in Figures 6A and 6B, the emitter 20, 70 is attached to the solar module by a rotatable and/or telescopic arm. This allows the emitter to be stowed safely against the module when transported, and rotated and/or telescoped into position across from the power component when deployed in the field. In this manner, the position of the emitter relative to the module is variable to allow for positioning of the emitter near the power component to improve power transfer. The rotatable arm 82 may be spring loaded to cause the emitter to be pressed against the barrier 12, 24, 28, 69.

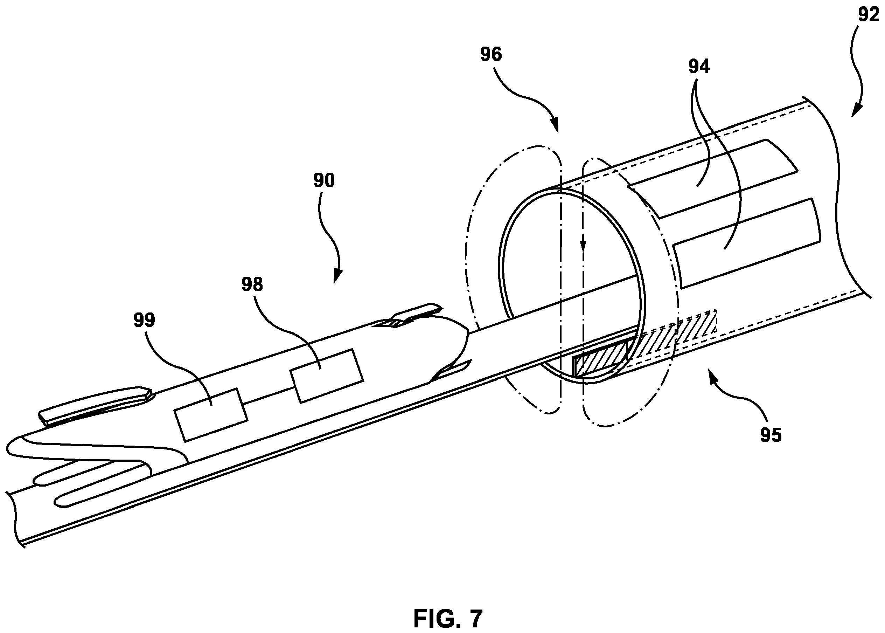

In some embodiments of the present technology, the magnetic induction effect may be initiated or enhanced by making one or both of the emitter and the power component mobile. With reference to Figure 7, such an embodiment is shown in the context of a high speed "hyperloop" vehicle 90 running inside a transport tube 92, which preferably has low air concentration to reduce drag on the vehicle.

According to this non-limiting embodiment, the exterior of the transport tube 92 is clad with photovoltaic cells 94. Only two cells 94 are illustrated for simplicity, but it is contemplated that the exact number will depend on the particular implementation. The size, number, and arrangement of the cells 94 will depend on the geographical region, specific vehicle, size of transport tube 92, etc. The exterior cells 94 convert sunlight to electricity that directly or indirectly is used by a transmitter or emitter 95 to create a magnetic field 96 that penetrates the transport tube 92 to reach its interior (shown schematically). When the electricity is used indirectly, batteries located in the exterior or interior of the tube 92 can be charged by the photovoltaic cells 94. The batteries can then power electromagnets to create the aforementioned magnetic fields.

In one embodiment, at any one time, the magnetic field is zero except at a segment of the transport tube of length L, which segment coincides approximately with the location of the passing vehicle. Thus, as explained in more detail below, a magnetic field can be created sequentially along segments of the hyperloop just ahead of the vehicle. Once the vehicle passes, the field in this segment is turned off, while subsequently it is turned on at a different segment ahead. In this way, the vehicle keeps experiencing a magnetic field as it moves along. Advantageously, segments far ahead of the vehicle or behind the vehicle have zero magnetic fields to conserve energy.

A power receiver component 98 (shown schematically) containing induction coils can be disposed on or in the vehicle 90 such that when a vehicle 90 travels through the tube 92, the coils experience a changing magnetic flux as the power component 98 on the vehicle 90 sweeps across the magnetic field 96. It is expected that the greater the velocity of the vehicle 90 and therefore of the power component 98, the greater the rate of change of the magnetic flux and therefore the greater the electromotive force induced in the induction coils. This electromotive force arising from the changing magnetic flux creates a current from the induction principle. This current can be used to power a battery 99 on or in the vehicle 90, for example, which could then power electrical devices therein. Alternatively, electricity can power electrical devices directly without involving a battery.

In some embodiments, a smart system could be included which senses when the vehicle 90 is about to pass a section of the transport tube 92 and to then create the magnetic field. Once the vehicle 90 passes, the magnetic field is turned off to conserve energy. In other words, the magnetic field is turned on just before the vehicle 90 approaches and is turned off once the vehicle 90 passes. It will be appreciated that a series of emitters could sequentially turn on and off as the vehicle 90 travels through the transport tube 92.

For illustrative purposes, suppose the transport tube is longitudinally divided into segments L1, L2, L3, ... Then, during time interval [t1, t2], the magnetic field is non-zero at the segment L1 and zero everywhere else. The time interval [t1,t2] corresponds to the times at which the vehicle is passing segment L1. At time interval [t2,t3], the magnetic field is non-zero at the segment L2 and zero everywhere else. The time interval [t2,t3] corresponds to the times at which the vehicle is passing segment L2, and so on. In this manner, the vehicle intermittently experiences a magnetic field; moreover, at a location along the hyperloop far from the location of the vehicle, the magnetic field is off to conserve energy.

Consider what happens when the vehicle passes through a particular segment, e.g., L2. The vehicle carries with it an induction loop. At first, no magnetic flux passes through the loop. As the vehicle approaches L2, some magnetic field lines start to pierce the loop, the number of such lines increasing as the vehicle penetrates L2. At some point the magnetic flux through the loop will reach a maximum and subsequently decrease as the vehicle continues to move forward. Eventually, the vehicle will have passed the segment L2 and there will be no magnetic field at the loop, until the vehicle reaches segment L3 a short time after. The reader of ordinary skill in the art will recognize that this changing magnetic flux gives rise to an electromotive force that drives a current in the vehicle in accordance with the principle of induction.

It is contemplated that a magnetic field can also be produced by a magnet on the vehicle, and the induction loop can reside on the tube. In one such an embodiment, a battery attached to the vehicle can power an electromagnet that produces a magnetic field as the vehicle passes through a fixed conduction loop attached to the tube, thereby producing electricity in the conduction loop via the principle of induction. This arrangement may be useful if a portion of the tube that requires electricity (for example, to turn on lights attached to the tube) is in an area that does not receive enough sunlight for PV cells (for example, the portion may be in a tunnel). In such case, a battery on the vehicle, which might have been charged as described above by other sections of the tube having PV cells exposed to sunlight, can wirelessly transfer power to the portion of the tube that does not receive enough sunlight.

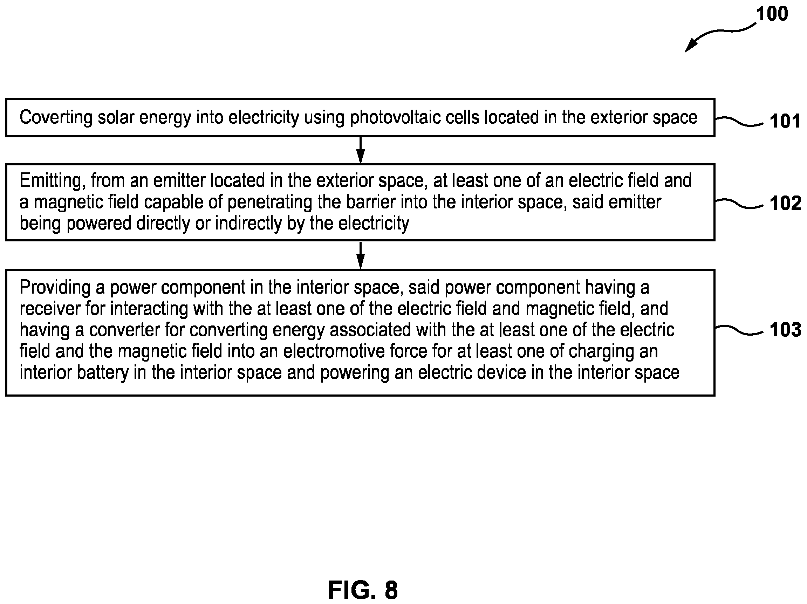

With reference to Figure 8, there is illustrated a method 100 for wirelessly transmitting energy across a barrier 12, 24, 28, 69 having on one side an exterior space 14 and on an opposite side an interior space 16, using the wireless transmission system 10, 66 described above.

The method begins, at step 101, with converting solar energy into electricity using photovoltaic cells located in the exterior space 14, such as the photovoltaic cells 26.

The method continues, at step 102, with emitting, from an emitter located in the exterior space 14, at least one of an electric field 52 and a magnetic field 54 capable of penetrating the barrier 12, 24, 28, 69 into the interior space 16. Said emitter, such as the emitter 20 is powered directly or indirectly by the electricity.

The at least one of the electric field 52 and the magnetic field 54 is capable of penetrating the barrier 12, 24, 28, 69 from the exterior space 14 to the interior space 16. Depending on the material and thickness of the barrier, the strength of the electric field and/or the magnetic field may be altered accordingly.

Prior to the emission, the method 100 may include adjusting emission frequency of the at least one of the electric field 52 and the magnetic field 54, according to the barrier 12 material and thickness that need to be penetrated.

The method continues, at step 103, with providing a power component in the interior space 16, such as the power component 22. Said power component 22 has a receiver, such as the receiver 36, for interacting with the at least one of the electric field and the magnetic field and a converter, such as the converter 38, for converting energy associated with the at least one of the electric field and the magnetic field into an electromotive force for at least one of charging an interior battery, such as the battery 50, and powering an electrical device in the interior space, such as appliances or lights.

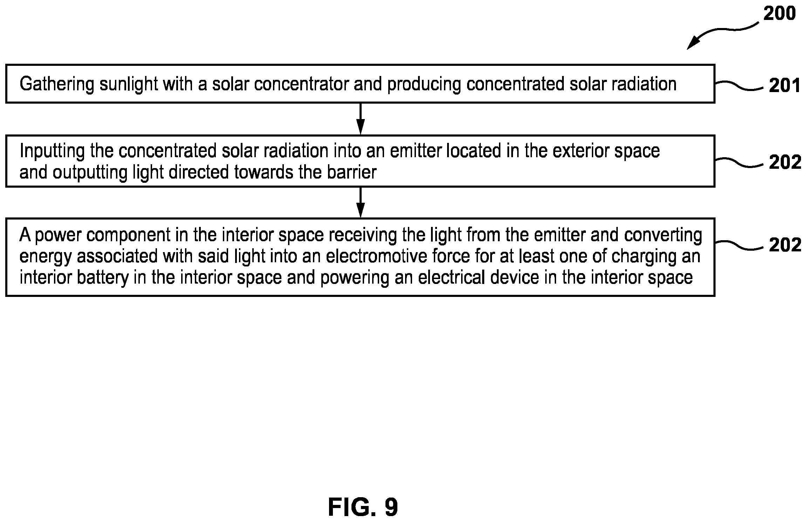

Figure 9 illustrates another method 200 of wirelessly transmitting energy across a barrier having on one side an exterior space and on an opposite side an interior space. The method 200 is carried out through a solar concentrator, using the wireless transmission system 66 described above.

The method 200 begins, at step 201, with gathering sunlight with a solar concentrator, such as the solar concentrator 68, and producing concentrated solar radiation.

The method 200 then continues, at step 202, with inputting the concentrated solar radiation into an emitter, such as the emitter 70, located in the exterior space 14 and outputting light directed towards the barrier 12, 24, 28, 69.

The method 200 then continues, at step 203, with a power component, such as the power component 76, in the interior space 14 receiving the light from the emitter 70 and converting energy associated with said light into an electromotive force 58 or at least one of charging an interior battery 50 in the interior space and powering an electrical device 60 in the interior space 16.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A wireless power transmission system for transmitting energy across a barrier having on one side an exterior space and on an opposite side an interior space, the system comprising:
a solar module in the exterior space, said solar module including photovoltaic cells for converting solar energy into electricity;
an emitter in the exterior space for emitting at least one of an electric field and a magnetic field capable of penetrating the barrier from the exterior space to the interior space, said emitter being electrically coupled to the solar module and being powered directly or indirectly by the electricity; and
a power component in the interior space, said power component having a receiver for interacting with the at least one of the electric field and the magnetic field, and having a converter for converting energy associated with the at least one of the electric field and the magnetic field into an electromotive force for at least one of charging an interior battery in the interior space and powering an electrical device in the interior space.

2. The system of claim 1, further comprising a junction box, the emitter being electrically coupled to the solar module via the junction box.

3. The system of claim 1, wherein:
the emitter includes a light source,
the at least one of an electric field and a magnetic field is electromagnetic radiation, and
the power component includes a photovoltaic device for receiving the electromagnetic radiation and generating electricity therefrom.

4. The system of claim 3, wherein the barrier is a window having two panes and the emitter has a moveable lens to cause a focal point of the light source to be between the two panes.

5. The system of claim 1, further comprising an exterior battery in the exterior space charged by the electricity generated by the solar module, wherein the emitter is powered directly by the electricity or indirectly by the exterior battery.

6. The system of claim 1, wherein the emitter includes an exterior induction element and the receiver includes an interior induction element, said exterior induction element producing a variable magnetic field that causes the interior induction element to produce the electromotive force.

7. The system of claim 6, wherein the emitter includes an inverter for converting DC power from the solar module into AC power, said AC power permitting the emitter to produce the variable magnetic field.

8. The system of claim 6, further comprising an electrical cable for connecting the solar module to the exterior induction element.

9. The system of claim 1, wherein the distance between the emitter and the receiver is less than fifteen centimeters.

10. The system of claim 1, wherein the power component is attachable to the barrier.

11. The system of claim 1, wherein at least one of the emitter and the power component is adapted to rest against the barrier.

12. The system of claim 1, wherein the receiver is capable of being contained in a nominal sphere having a diameter of ten centimeters.

13. The system of claim 1, wherein at least one of the emitter and the power component resides on a vehicle.

14. The system of claim 13, wherein the emitter is affixed to a transport tube and the emitter is capable of creating a magnetic field in the transport tube, and wherein the power component is affixed to the vehicle and the power component contains an induction element that supports an electric current arising from induction as the induction element passes through the magnetic field.

15. A method for wirelessly transmitting energy across a barrier having on one side an exterior space and on an opposite side an interior space, the method comprising:
converting solar energy into electricity using photovoltaic cells located in the exterior space;
emitting, from an emitter located in the exterior space, at least one of an electric field and a magnetic field capable of penetrating the barrier into the interior space, said emitter being powered directly or indirectly by the electricity; and
providing a power component in the interior space, said power component having a receiver for interacting with the at least one of the electric field and the magnetic field, and having a converter for converting energy associated with the at least one of the electric field and the magnetic field into an electromotive force for at least one of charging an interior battery in the interior space and powering an electrical device in the interior space.
